# EUROPEAN PATENT APPLICATION

(11) **EP 4 749 500 A1**
(43) Date of publication of application: **27.05.2026**
(21) Application number: 25187065.5
(22) Date of filing: 02.07.2025
(51) Int. Cl.: G06F 21/64, G01R 31/367, H01M 10/42, H04L 9/32, H04L 9/00

(54) **SYSTEM AND METHOD FOR MANAGING BATTERY DATA**

(30) Priority: 26.11.2024 KR 20240171345
(71) Applicant: SAMSUNG SDI CO., LTD., Yongin-si, Gyeonggi-do 17084 (KR)
(72) Inventor: KIM, Min Su, 16678 Suwon-si (KR)
(74) Representative: Marks & Clerk LLP

(57) **Abstract**

Provided are a system and method for managing battery data. The technical object is to propose a mechanism for improving data management efficiency and reliability of a wireless battery management system (wBMS) while effectively compressing a large amount of data generated from a battery module, optimizing a storage space, allowing distributed storage, and also ensuring the integrity of the compressed data. To this end, a configuration is provided that compresses battery data measured from each module of a battery pack, generates a chain hash for the compressed data of each module to ensure the integrity of the battery data, and stores the compressed data of each module in a memory in a distributed manner through data structuring based on the chain hash.

## Description

### FIELD

The present disclosure relates to a system and method for managing battery data.

### BACKGROUND

The electric vehicle (EV) industry is growing rapidly with the growing global demand for sustainable transportation, putting high emphasis on the importance of high-performance battery technology. Lithium-ion batteries, a key component of EVs, have been significantly improved in energy density, longevity, and safety through continuous technological innovation, but lithium-ion batteries are still complex systems that require efficient management and monitoring. Battery management systems (BMSs) play a key role in optimizing the performance and extending the life of such expensive battery packs. Lately, wireless battery management systems (wBMSs) have been attracting attention with the development of wireless communication technology, and wBMSs have the advantage of reducing manufacturing costs and increasing reliability by reducing complex wiring inside battery packs.

Increasing attention to the environmental impact of EV batteries throughout their lifecycle, from production to recycling, has led to new regulations such as the battery passport scheme in the European Union (EU). These require detailed information about the carbon footprint, raw material sources, recyclability, and the like of batteries during the production, use, and recycling processes, making the systematic collection, storage, and management of battery data increasingly important. In addition, the development of battery technology is emphasizing the modularity and scalability of battery packs, increasing the necessity of flexible and efficient BMSs. In connection with this, advanced wBMS technology that may efficiently compress and securely store data is emerging as a key factor in determining the future competitiveness of the EV industry, and is attracting the attention of automakers and battery companies.

The information disclosed in this Background section is for enhancement of understanding of the background of the present disclosure, and therefore, it may contain information that does not constitute related (or prior) art.

### SUMMARY

The present disclosure is directed to a system and method for managing battery data that improve the data management efficiency and reliability of a wireless battery management system (wBMS) while effectively compressing a large amount of data generated from a battery module, optimizing a storage space, allowing distributed storage, and also ensuring the integrity of the compressed data.

However, objects that the present disclosure intends to achieve are not limited to the herein-described objects and other objects that are not described may be clearly understood by those skilled in the art from the following description.

According to an aspect of the present disclosure, there is provided a system for managing battery data, the system including a memory and a processor configured to compress battery data measured from each module of a battery pack, generate a chain hash for the compressed data of each module to ensure integrity of the battery data, and store the compressed data of each module in the memory in a distributed manner through data structuring based on the chain hash.

The battery data may include at least one of a voltage, a temperature, and a current of each module.

The processor may compress consecutive identical values of the battery data in the form of (count, value) using run-length encoding.

The processor may analyze variability of the battery data using adaptive hybrid encoding (AHE), which is a combination of delta encoding and the run-length encoding, to dynamically set a threshold and may compress the battery data using the set threshold.

The processor may compress the consecutive identical values of the battery data using the run-length encoding and compress changed values of the battery data using the delta encoding on the basis of a difference between a current value and a previous value.

The processor may convert the compressed data into a string, add a previous hash value to the string to generate a string combined with the previous hash value, and apply a Secure Hash Algorithm (e.g. Secure Hash Algorithm (SHA)-256) to the generated string combined with the previous hash value to generate a hash calculation result as the chain hash.

The processor may set a previous hash value of a first module in the battery pack as a preset initial value.

The processor may structure the compressed data of each module into data based on the chain hash using a JavaScript Object Notation (JSON)-based data schema in accordance with battery passport requirements.

The processor may detect data deviating from a normal pattern among the battery data in real time using a machine learning-based anomaly detection algorithm and output a warning signal.

According to another aspect of the present disclosure, there is provided a method of managing battery data, the method including compressing, by a processor, battery data measured from each module of a battery pack, generating, by the processor, a chain hash for the compressed data of each module to ensure integrity of the battery data, and storing, by the processor, the compressed data of each module in a distributed manner through data structuring based on the chain hash.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a block diagram of a system for managing battery data according to embodiments of the present disclosure;
FIG. 2 is a diagram illustrating in detail a battery data compression and distributed storage mechanism of a system for managing battery data according to embodiments of the present disclosure;
FIG. 3 is a flowchart of a method of managing battery data according to embodiments of the present disclosure;
FIG. 4 is a flowchart of a process of compressing data using an adaptive hybrid encoding (AHE) algorithm according to embodiments of the present disclosure; and
FIG. 5 is a flowchart of a process of generating a chain hash according to embodiments of the present disclosure.

### DETAILED DESCRIPTION

Hereinafter, embodiments of the present disclosure will be described in detail with reference to the accompanying drawings. The terms or words used in this specification and claims should not be construed as being limited to the usual or dictionary meanings and should be interpreted with meanings and concepts consistent with the technical idea of the present disclosure based on the principle that the inventor can be his/her own lexicographer to appropriately define the concept of a term to explain his/her disclosure in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, the applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to the other element. In addition, when a part is referred to as being "electrically coupled" to another part, the part can be directly connected to the other part or an intervening part may be present therebetween such that the part and the other part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

Before describing embodiments, improvements and ultimate goals of the present disclosure will be described.

Battery management systems (BMSs) are continuously being improved with the development of the electric vehicle (EV) industry, and several main trends have already emerged.

First, the introduction of a wireless BMS (wBMS) utilizing wireless communication technology is actively underway, with the goal of reducing complex wiring inside a battery pack to reduce manufacturing costs and improve reliability.

Second, efforts are being made to incorporate artificial intelligence (AI) and machine learning technologies into BMSs to improve the accuracy of battery state predictions and develop optimal charging and discharging strategies.

Third, research is ongoing to improve the overall performance and lifespan of battery packs through improvements in battery cell balancing technology, which is moving toward more precise management of the states of individual cells.

Fourth, to enhance the safety of batteries, thermal management systems are being advanced, and technologies for detecting anomalies at an early stage are actively being developed.

Fifth, there are attempts to introduce encryption and blockchain technology to enhance the security of battery data, with a focus on ensuring the integrity and reliability of the data.

Sixth, to increase the modularity and extensibility of battery packs, plug-andplay BMS designs are being studied, with the goal of a system that flexibly responds to various battery configurations.

Seventh, to maximize energy efficiency, low-power design technologies for minimizing the power consumption of a BMS itself are being developed.

Finally, in response to new regulations, such as the European Union (EU)'s battery passport scheme, systems are being developed to efficiently collect, store, and manage data across the entire lifecycle of a battery. These various improvement efforts are aimed at improving the performance, safety, and affordability of vehicles, with the ultimate goal of providing sustainable mobility solutions.

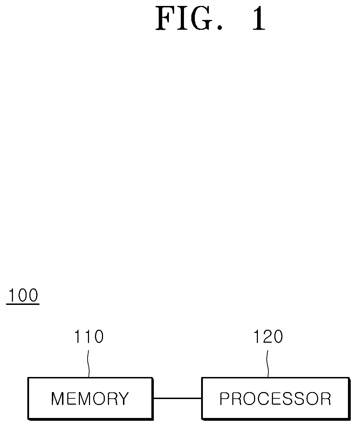

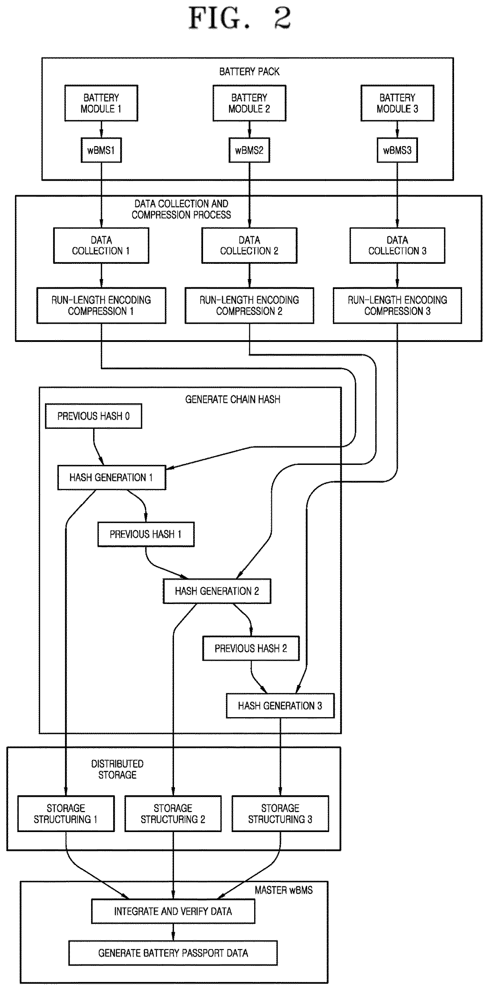

FIG. 1 is a block diagram of a system for managing battery data according to embodiments of the present disclosure, and FIG. 2 is a diagram illustrating in detail a battery data compression and distributed storage mechanism of a system for managing battery data according to embodiments of the present disclosure.

Referring to FIGS. 1 and 2, a system 100 for managing battery data according to embodiments may include a memory 110 and a processor 120, and each of the components 110 and 120 may constitute a battery pack together with a battery that is managed by a wBMS in embodiments.

The memory 110 may store at least one instruction executed by the processor 120 which will be described herein. The memory 110 may be implemented as a volatile storage medium and/or a non-volatile storage medium. For example, the memory 110 may be implemented as a read-only memory (ROM) and/or a random access memory (RAM).

Also, the memory 110 may store data of each module compressed by the processor 120. For example, the memory 110 may store battery data such as a battery voltage, a battery temperature, a battery current, and the like.

The processor 120 is an entity that manages battery data and may be implemented as a central processing unit (CPU) or a system on chip (SoC). The processor 120 may run an operating system (OS) or an application to control a plurality of hardware connected to the processor 120 or software components and may process a variety of data and perform various computations. The processor 120 may be configured to execute the at least one instruction stored in the memory 110 and store the execution result data in the memory 110. Meanwhile, the processor 120 may be implemented as a BMS provided in a battery pack or a microcontroller unit (MCU) in the BMS, and as is well known, may be configured to detect battery data, such as a current, a voltage, an open circuit voltage (OCV), and/or a temperature of a battery cell.

Operations of the processor 120 managing battery data will be described in detail herein.

The processor 120 may measure battery data, such as a voltage, a temperature, a current, and the like, of each module in a battery pack. For example, in the case of a battery pack including three modules, the processor 120 may measure battery data for ten time units. Here, a first module may have voltages of [3.7, 3.7, 3.8, 3.8, 3.8, 3.9, 3.9, 3.9, 3.8, 3.8], temperatures of [25.0, 25.5, 26.0, 26.0, 26.5, 27.0, 27.0, 27.5, 27.5, 27.0], and currents of [2.1, 2.1, 2.0, 2.0, 2.2, 2.2, 2.1, 2.1, 2.0, 2.0]

The processor 120 may compress the measured battery data of each module in the battery pack. To this end, the processor 120 may compress consecutive identical values of the battery data in the form of (count, value) using run-length encoding. In other words, the processor 120 may perform compression by setting a first value of each measurement item (voltage, temperature, current) of the battery data as a reference value, counting the number of consecutive identical values, storing the battery data in the form of (count, value), and starting a new pair of (count, value) when the value changes. Compressing consecutive identical values of the battery data in the form of (count, value) may comprise converting the identical values into a count value pair (a count and a value), wherein the count specifies the number of consecutive identical values, and the value specifies the value of the consecutive values.

For example, the processor 120 may compress the foregoing voltage data [3.7, 3.7, 3.8, 3.8, 3.8, 3.9, 3.9, 3.9, 3.8, 3.8] of the first module into [(2, 3.7), (3, 3.8), (3, 3.9), (2, 3.8)]. Also, the processor 120 may compress the temperature data [25.0, 25.5, 26.0, 26.0, 26.5, 27.0, 27.0, 27.5, 27.5, 27.0] of the first module into [(1, 25.0), (1, 25.5), (2, 26.0), (1, 26.5), (2, 27.0), (2, 27.5), (1, 27.0)]. Further, the processor 120 may compress the current data [2.1, 2.1, 2.0, 2.0, 2.2, 2.2, 2.1, 2.1, 2.0, 2.0] of the first module into [(2, 2.1), (2, 2.0), (2, 2.2), (2, 2.1), (2, 2.0)].

In embodiments, the processor 120 may analyze variability of the battery data using adaptive hybrid encoding (AHE), which is a combination of delta encoding and run-length encoding, to dynamically set a threshold and may compress the battery data using the set threshold. For example, the processor 120 may compress consecutive identical values of the battery data using run-length encoding and compress changed values of the battery data using delta encoding on the basis of the difference between a current value and a previous value.

An AHE algorithm will be described in detail herein. According to the AHE algorithm, first (1^{st} operation: dynamic threshold calculation), variability of data is analyzed to calculate a dynamic threshold (equation: δ=α*α(ΔX)). Here, δ is a dynamic threshold, α is an adjustment factor (which is generally 0.5), and α(ΔX) is a standard deviation of differences between consecutive data points. For example, when raw data is [3.7, 3.72, 3.69, 3.71, 3.7, 3.7, 3.68, 3.75, 3.8, 3.79], the AHE algorithm may perform calculation like ΔX=[0.02, -0.03, 0.02, -0.01, 0, -0.02, 0.07, 0.05, -0.01], α(ΔX)≈0.0308, and δ=0.5*0.0308≈0.0154 using the equation. For instance, the differences between consecutive data points may be determined, and then the standard deviation may be determined based on the differences. The standard deviation may then be adjusted (e.g. weighted) using the adjustment factor to produce the dynamic threshold.

Subsequently (2^{nd} operation: encoding initialization), according to the AHE algorithm, an initial value may be set to start encoding. In other words, according to the AHE algorithm, initial values may be set like a previous value (*pre_value*)*=*first data point, a count (*count*)=1, and an encoding result (*encoded*)=[]. For example, according to the AHE algorithm, initial values may be set like *pre_value*=3.7, *count=*1, and *encoded*=[]*.*

Subsequently (3^{rd} operation: data looping and encoding), according to the AHE algorithm, data is looped to calculate a difference (delta Δ) between a current value and a previous value, and the data may be encoded on the basis of the difference. In other words, according to the AHE algorithm, when the absolute value of Δ is less than or equal to δ, *count* is increased. Otherwise, after (*count, prev value*) and (1, Δ) are added (e.g. appended) to *encoded, prev value* may be updated, and *count* may be initialized. For instance, a first encoded pair may include count = 1 and the value for the first value. After this point, later values may be encoded based on their difference. If the magnitude of the difference is less than or equal to the threshold δ, the value may be encoded as if it is the same as the previous value, and therefore the encoded count for the previous value may be increased by one. If the magnitude of the difference is greater than the threshold δ, a new pair of entries may be added to the encoded values, including count = 1 and the difference.

For example, according to the AHE algorithm, when a current value is 3.72 and Δ is 0.02, |0.02|≤0.0154 does not hold true, and thus *encoded*=[(1, 3.7), (1, 0.02)], *prev value=3.72* and *count=*1*.* Also, according to the AHE algorithm, when a current value is 3.69 and Δ is -0.03, *encoded*=[(1, 3.7), (1, 0.02), (1, *-*0.03)], *prev_value*=3.69, and *count=*1*.* Further, according to the AHE algorithm, when a current value is 3.71 and Δ is 0.02, |0.02|≤0.0154 does not hold true, and thus *encoded*=[(1, 3.7), (1, 0.02), (1, -0.03), (1, 0.02)], *prev_value*=3.71 and *count*=1.

Subsequently (4^{th} operation: final encoding completion), according to the AHE algorithm, all the data is looped, and then the last group may be added (e.g. appended) to the encoding result. In other words, according to the AHE algorithm, (*count, prev_value*) and (1, Δ) may be added to *encoded.* Accordingly, the AHE algorithm may output *encoded*=[(1, 3.7), (1, 0.02), (1, -0.03), (1, 0.02), (2, 3.7), (1, -0.02), (1, 0.07), (1, 0.05), (1, -0.01)] as a final encoding result.

Subsequently (5^{th} operation: decoding), according to the AHE algorithm, the encoded data may be restored to the original form. This process may be performed as necessary. In other words, according to the AHE algorithm, the result array may be initialized (*decoded*=[]), and then the array of *encoded* may be looped. In other words, according to the AHE algorithm, after pairs of (*count, value*) are processed, *value* may be added to *decoded* as many times as *count* when *value* is a real number, and (previous value + *value*) may be added to *decoded* otherwise. Accordingly, the AHE algorithm may output [3.7, 3.72, 3.69, 3.71, 3.7, 3.7, 3.68, 3.75, 3.8, 3.79] as a decoding result. For instance, the first pair of entries (*count, value*) in *encoded* may be processed by adding (e.g. appending) *value* to *decoded* a number of times equal to *count.* Subsequent pairs of entries (*count, difference)* may be processed based on the *difference* relative to the previous *value.* That is, a subsequent (*count, difference*) pair may be processed by calculating the *value* by calculating the sum of the *difference* and the previous *value,* and then adding (e.g. appending) the calculated *value* to *decoded* a number of times equal to *count.*

Meanwhile, the processor 120 may generate a chain hash for the compressed data of each module of the battery pack to ensure the integrity of the battery data, and may store the compressed data of each module of the battery pack in the memory 110 in a distributed manner through data structuring based on the generated chain hash.

The processor 120 may convert the compressed data into a string and add (e.g. append) a previous hash value to the string to generate a string combined with the previous hash value. Here, the processor 120 may apply a Secure Hash Algorithm (SHA), such as SHA-256, to the generated string combined with the previous hash value to generate a hash calculation result as a chain hash.

The processor 120 may set a previous hash value of the first module in the battery pack as a preset initial value. For example, the processor 120 may set a previous hash value of the first module in the battery pack as a "genesis hash" (e.g., "0"*64).

As described herein, the processor 120 generates a chain hash to ensure the integrity of compressed data, providing optimal balance between compression efficiency and data reliability.

The processor 120 may structure the compressed data of each module of the battery pack into data based on the chain hash using a JavaScript Object Notation (JSON)-based data schema in accordance with battery passport requirements. In this way, the processor 120 can effectively extract data and generate a report to cope with regulations and effectively manage results of compression and hash generation to prepare a base for distributed storage. The processor 120 can maximize scalability, reliability, and performance of the system 100 through distributed storage.

The processor 120 may detect data deviating from a normal (e.g. nonanomalous) pattern among the battery data in real time using a machine learning-based anomaly detection algorithm (isolation forest) and output a warning signal. According to embodiments, the processor 120 may learn a normal pattern from past one-month data of each module and calculate an anomaly score for a real-time data stream. When the calculated anomaly score exceeds a threshold, the processor 120 may transmit a warning signal to a central system. The machine learning-based anomaly detection algorithm may be trained by adjusting parameters of a machine learning anomaly detection model (e.g. through supervised or unsupervised learning).

According to embodiments, a run-length encoding-based compression algorithm is used to effectively compress and store battery data, which can improve data storage efficiency. Also, the risk of data tampering is reduced by a chain hashbased distributed storage method, which can enhance data integrity and security. Further, when configuration of a battery pack is changed, reconfiguration of the battery pack is facilitated by module-specific independent data management, which can lead to system flexibility and extensibility. In addition, according to embodiments, energy efficiency can be maximized by an optimized compression algorithm and distributed processing, and a data structure optimized for battery passport requirements can be used to improve a regulatory response capability. Also, distributed processing shortens data collection and analysis periods, which allows real-time monitoring and response, and minimizes data loss in the event of replacing individual modules, which facilitates maintenance.

As described herein, according to the present disclosure, more battery history data can be stored in the same storage space, which can improve the accuracy of long-term performance analysis and prediction, and the reliability of data is improved, which can improve the accuracy of battery performance and life predictions. According to the present disclosure, various battery configurations can be easily applied, which can shorten product development periods, and the power consumption of a BMS can be reduced, which can increase the overall energy efficiency of an EV. According to the present disclosure, it is possible to reduce a time for processing data to comply with regulations and a report generation time, and a rate of detecting and coping with an abnormal battery state increases, which can improve safety. According to the present disclosure, a maintenance time is shortened, and thus a vehicle utilization rate (VUR) can be increased.

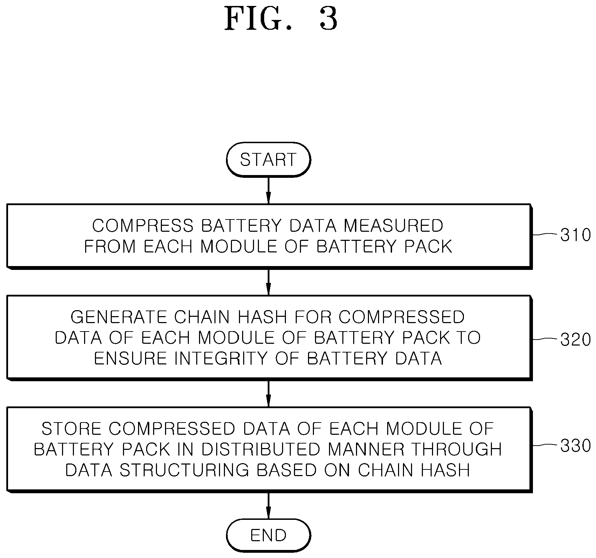

FIG. 3 is a flowchart of a method of managing battery data according to embodiments of the present disclosure. A data compression and distributed storage mechanism will be described as a method of managing battery data according to embodiments of the present disclosure with reference to FIG. 3. Detailed description of elements that have been described herein will be omitted, and a time-series configuration thereof will be mainly described.

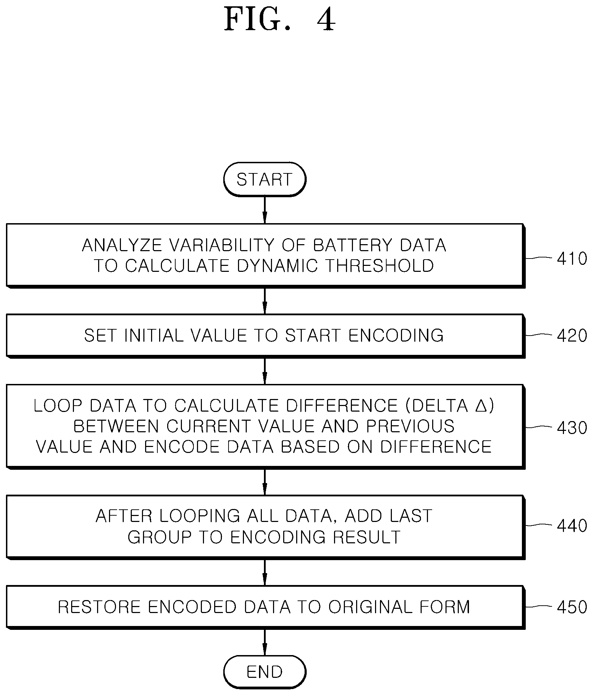

First, referring to FIGS. 1 and 3, in operation 310, the processor 120 may compress battery data which is measured from each module of a battery pack. This will be described herein with reference to FIG. 4.

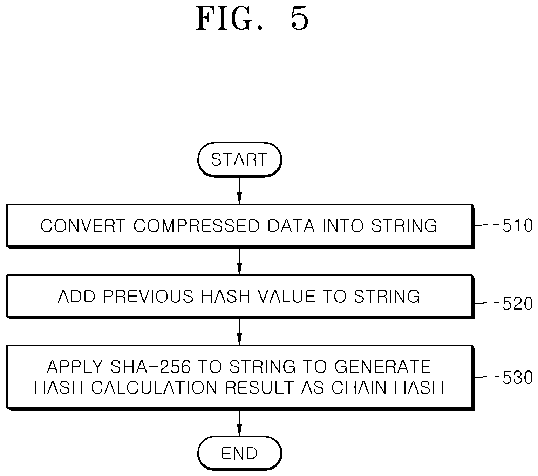

Subsequently, in operation 320, the processor 120 may generate a chain hash for the compressed data of each module of the battery pack to ensure the integrity of the battery data. This will be described herein with reference to FIG. 5.

Subsequently, in operation 330, the processor 120 may store the compressed data of each module of the battery pack in a distributed manner through data structuring based on the chain hash. Data structuring may involve mapping the compressed data to various data locations (e.g. distributed across a number of memory devices or storage nodes) based on the chain hash. The chain hash may be used to determine the memory location to store the data. Storing the data in a distributed manner can improve fault tolerance.

FIG. 4 is a flowchart of a process of compressing data using the AHE algorithm according to embodiments of the present disclosure.

Referring to FIGS. 1 and 4, in operation 410, the processor 120 may analyze variability of battery data to calculate a dynamic threshold.

Subsequently, in operation 420, the processor 120 may set an initial value to start encoding.

Subsequently, in operation 430, the processor 120 may loop the data to calculate a difference (delta Δ) between a current value and a previous value, and encode the data on the basis of the difference.

Subsequently, in operation 440, after looping all the data, the processor 120 may add the last group to the encoding result.

Subsequently, in operation 450, the processor 120 may restore the encoded data to the original form. This operation 450 may be performed as necessary (e.g. during decoding).

FIG. 5 is a flowchart of a process of generating a chain hash according to embodiments of the present disclosure.

Referring to FIGS. 1 and 5, in operation 510, the processor 120 may convert compressed data into a string.

Subsequently, in operation 520, the processor 120 may add a previous hash value to the string to generate a string combined with the previous hash value.

Here, the processor 120 may set a previous hash value of a first module in a battery pack as a preset initial value. For example, the processor 120 may set a previous hash value of the first module in the battery pack as a "genesis hash" (e.g., "0"*64).

Subsequently, in operation 530, the processor 120 may apply SHA-256 to the generated string combined with the previous hash value (e.g. hash value of battery data for a previous battery module) to generate a hash calculation result as a chain hash.

Implementations described herein may be embodied as, for example, a method, a process, a device, a software program, a data stream, and a signal. Even when discussed in the context of a single form of implementation (e.g., only discussed as a method), the discussed features may also be realized in another form (e.g., a device or a program). The device may be implemented in a suitable form, such as hardware, software, or firmware. The method may be realized in a device, such as a processor, generally referred to as a processing device including, for example, a computer, a microprocessor, an integrated circuit, a programmable logic device, or the like. The processor may also include a communication device, such as a computer, a cellular phone, a personal digital assistant (PDA), and other communication devices, that facilitates information communication between end users.

According to the present disclosure, more battery history data can be stored in the same storage space, and thus it is possible to improve the accuracy of long-term performance analysis and prediction.

According to the present disclosure, data reliability is improved, and thus it is possible to improve battery performance and the accuracy of prediction.

According to the present disclosure, various battery configurations can be easily adapted, leading to a reduction of a product development period.

According to the present disclosure, due to a reduction in the power consumption of a battery management system (BMS), it is possible to increase the overall energy efficiency of an EV.

According to the present disclosure, it is possible to reduce a time for processing data to comply with regulations and a report generation time.

According to the present disclosure, a rate of detecting and coping with an abnormal battery state increases, which can improve safety.

According to the present disclosure, a maintenance time is shortened, and thus a VUR can be increased.

However, effects that can be achieved through the present disclosure are not limited to the herein-described effects and other effects that are not described may be clearly understood by those skilled in the art from the detailed descriptions.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the following claims and their equivalents.

## Claims

1. A system for managing battery data, comprising:
a memory; and
a processor configured to compress battery data measured from each module of a battery pack, generate a chain hash for the compressed data of each module to ensure integrity of the battery data, and store the compressed data of each module in the memory in a distributed manner through data structuring based on the chain hash.

2. The system of claim 1, wherein the battery data includes at least one of a voltage, a temperature, and a current of each module.

3. The system of claim 1 or claim 2, wherein the processor is configured to compress consecutive identical values of the battery data in the form of count and value using run-length encoding.

4. The system of claim 3, wherein the processor is configured to analyze variability of the battery data using adaptive hybrid encoding, which is a combination of delta encoding and the run-length encoding, to dynamically set a threshold and compress the battery data using the set threshold.

5. The system of claim 4, wherein the processor is configured to compress the consecutive identical values of the battery data using the run-length encoding and compress changed values of the battery data using the delta encoding on the basis of a difference between a current value and a previous value.

6. The system of any preceding claim, wherein the processor is configured to convert the compressed data into a string, add a previous hash value to the string to generate a string combined with the previous hash value, and apply a Secure Hash Algorithm to the generated string combined with the previous hash value to generate a hash calculation result as the chain hash.

7. The system of claim 6, wherein the processor is configured to set a previous hash value of a first module in the battery pack as a preset initial value.

8. The system of any preceding claim, wherein the processor is configured to structure the compressed data of each module into data based on the chain hash using a JavaScript Object Notation -based data schema in accordance with battery passport requirements.

9. The system of any preceding claim, wherein the processor is configured to detect data deviating from a normal pattern among the battery data in real time using a machine learning-based anomaly detection algorithm and output a warning signal.

10. A method of managing battery data, comprising:
compressing, by a processor, battery data measured from each module of a battery pack;
generating, by the processor, a chain hash for the compressed data of each module to ensure integrity of the battery data; and
storing, by the processor, the compressed data of each module in a distributed manner through data structuring based on the chain hash.

11. The method of claim 10, wherein the compressing of the battery data comprises compressing consecutive identical values of the battery data in the form of count and value using run-length encoding.

12. The method of claim 11, wherein the compressing of the battery data further comprises:
analyzing variability of the battery data using adaptive hybrid encoding, which is a combination of delta encoding and the run-length encoding, to dynamically set a threshold; and
compressing the battery data using the set threshold.

13. The method of claim 12, wherein compressing of the battery data further comprises:
compressing the consecutive identical values of the battery data using the run-length encoding; and
compressing changed values of the battery data using the delta encoding on the basis of a difference between a current value and a previous value.

14. The method of any of claims 10-13, wherein the generating of the chain hash comprises:
converting the compressed data into a string;
adding a previous hash value to the string to generate a string combined with the previous hash value; and
applying a Secure Hash Algorithm to the generated string combined with the previous hash value to generate a hash calculation result as the chain hash.

15. The method of claim 14, wherein the generating of the chain hash comprises setting a previous hash value of a first module in the battery pack as a preset initial value.
